# EUROPEAN PATENT SPECIFICATION

(11) **EP 1 053 081 B1**
(45) Date of publication and mention of the grant of the patent: **07.07.2004**
(21) Application number: 99959529.1
(22) Date of filing: 06.12.1999
(51) Int. Cl.: B25D 17/08

(54) **HAMMER**
SCHLAGBOHRMASCHINE
OUTIL A PERCUSSION

(30) Priority: 04.12.1998 DE 19857774
(43) Date of publication of application: 22.11.2000
(73) Proprietor: Black & Decker Inc., Newark Delaware 19711 (US)
(72) Inventor: LOOS, Bernd, D-65556 Limburg (DE); PLIETSCH, Reinhard, D-65611 Brechen (DE)
(74) Representative: Dlugosz, Anthony Charles
(86) International application number: PCT/GB1999/004112
(87) International publication number: WO 2000/034013

(56) References cited:
- DE-A- 3 344 999
- DE-U- 9 305 463

## Description

The invention relates to a hammer having a hammer housing, a motor arranged in the hammer housing, a spindle arranged to be driven in rotation by the motor, a percussion mechanism arranged to be driven by the motor and having a percussion member movable with a reciprocating motion, and a tool holder releasably mounted at the front end of the spindle, the tool holder having a receiving body for receiving, in a manner locked against rotation, a hammer drill bit on which blows of the percussion member act. For coupling the spindle and the tool holder there are provided radially displaceable locking members, which, in the coupled state, are supported against radially outward displacement by a positioning sleeve arranged on the receiving body and located in its locking position; when the positioning sleeve is displaced axially forwards against spring pressure into a release position, the locking members are displaceable radially outwards, so that the tool holder can be removed from the spindle.

Hammers of this type are known (DE 34 43 186 C2) and have the advantage that the tool holder can be released from the hammer in a simple manner and exchanged for a different type of tool holder. Hence, for example, the user can replace a tool holder designed to receive hammer drill bits having a so-called SDS-Plus shank with a tool holder that contains clamping jaws for holding a round-shank drill bit, so that with the percussion mechanism deactivated the hammer can be operated like a drill.

With this known construction of a hammer, it is a problem that in hammer drilling mode, and, if applicable, in chiselling mode, when the reciprocating percussion element is exerting blows on the rear end of the hammer drill bit with the impact that is usually provided, vibrations are transferred to the positioning sleeve, and can cause it to be displaced towards the release position. This displacement movement becomes especially marked when, during operation, there is a change-over to so-called idling, that is, when the leading end of the hammer drill bit comes out of engagement with workpiece and jumps abruptly forwards as a consequence of the percussion action. As a result, the impact in the hammer spindle also shifts forwards, and is braked at an annular shoulder. The resulting impact is transferred forwards to the receiving body of the tool holder, which can lead to the impact being passed on to the positioning sleeve, so that this is displaced forwards against the effective spring force towards the release position. This can lead to release of the locking elements, causing the tool holder to separate suddenly from the hammer, which is extremely dangerous.

The aim of the invention is to improve a hammer such that the risk of unintentional separation of hammer and tool holder is eliminated.

To solve that problem, a hammer of the kind mentioned in the introduction is constructed in accordance with the invention so that between the receiving body and the positioning sleeve there is a damping spring supporting the positioning sleeve in its locking position, the damping spring preferably being in its undeformed state when the positioning sleeve is in its locking position.

In the case of the hammer according to the invention, the damping spring provided therefore effects a "disengagement" of the receiving body of the tool holder and the positioning sleeve in that, as the impacts or blows are transferred to the receiving body of the tool holder, the damping spring undergoes deformation, in so doing absorbing the impacts or blows, without the impacts or blows being transferred to the positioning sleeve. There is therefore no longer any risk that the tool holder will become detached unintentionally from the spindle of the hammer because of impacts or blows. It should be mentioned that the spring constant of the damping spring must be matched to the individual case; on the one hand, the spring constant of the spring must be sufficiently low that the deformation resulting from impact transfer is large enough to convert the impact energy into deformation work, yet on the other hand it must be sufficiently large that as the damping spring is being deformed as a consequence of an impact, part of the impact is not directly transferred to the positioning sleeve.

The damping spring can be arranged between an annular shoulder provided at the rear end of the receiving body and the rear end of the positioning sleeve, that is, between the regions via which impacts and blows acting on the receiving body would be transferred to the positioning sleeve if the damping spring were not present.

The damping spring is preferably in the form of a disc spring, which is easy to manufacture and because of its form makes no particular demands on the construction of the supporting surfaces with which it cooperates.

The invention is explained in detail hereinafter with reference to the Figures, which show an exemplary embodiment.
- Fig. 1: shows, partly in elevation and partly in section, a hammer, the region in section illustrating percussion mode above the centre line and idling below the centre line.
- Fig. 2: shows the tool holder of the hammer from Fig. 1 in section.
- Fig. 3: shows in elevation the damping spring of the tool holder according to Figure 2.

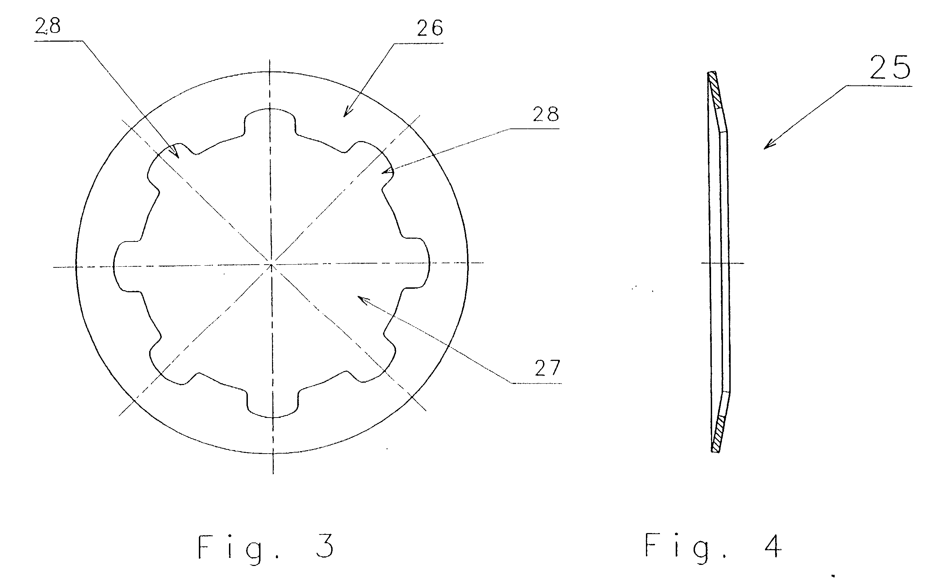

- Fig. 4: shows the damping spring of Figure 3 in section.

The hammer illustrated is essentially of customary construction and has a gearbox 2 receiving part of the percussion mechanism and the gears, a motor housing 3 containing the electric motor and connected to the gearbox 2, and a handle housing 4, which together with the rear end region of the gearbox 2 forms a handle opening; the customary switch operator 5 displaceable against spring pressure for triggering the ON/OFF switch projects into the handle opening. At the front end of the gearbox 2 there is a neck portion, to which an additional handle 6 is secured and at the front end of which is arranged the tool holder 10, which is rotatable relative to the neck portion.

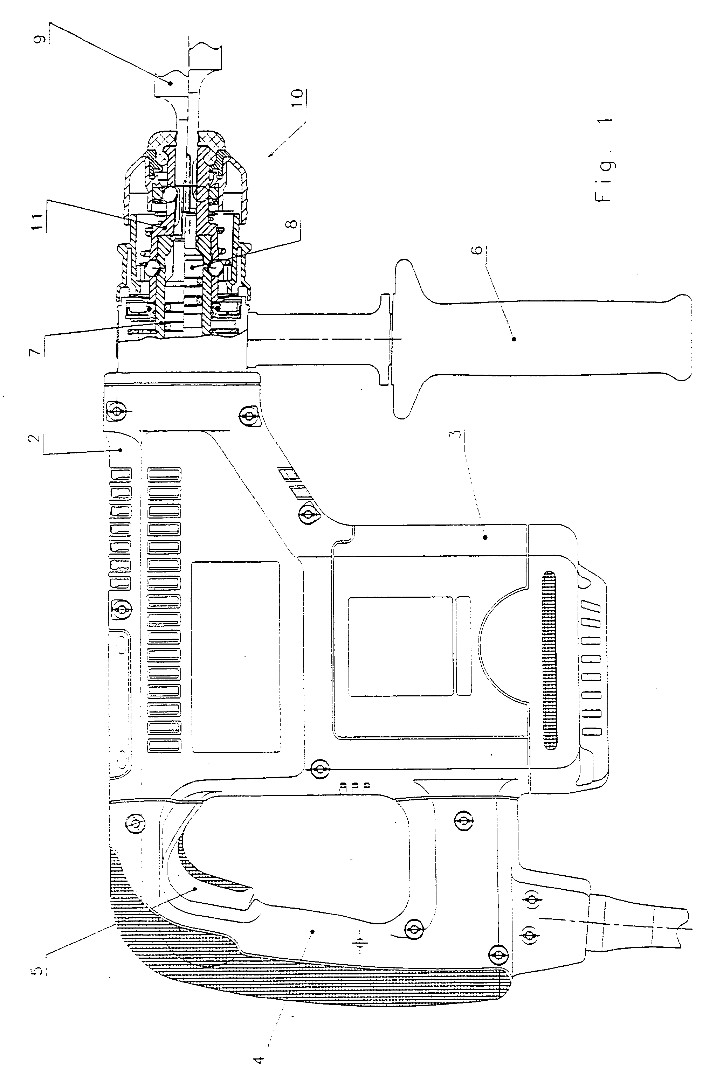

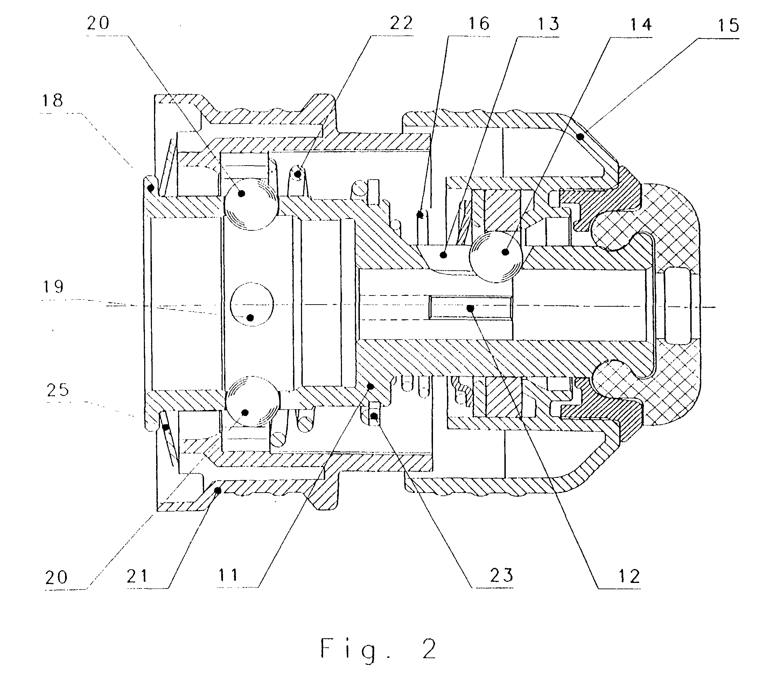

The tool holder 10 has a receiving body 11, which has an opening for receiving the shank of a hammer bit 9. For that purpose, in the opening there are axial, radially inwardly projecting ribs 12, which, when the hammer drill bit 9 is inserted, engage in axially extending grooves, open at the rear end, in the shank of the hammer drill bit 9, and in operation serve to transfer the torque from the took holder 10 driven in rotation to the hammer drill bit 9. In addition, extending into the receiving opening of the receiving body 11 is a locking ball 14, which is arranged in an elongate through-opening 13. The locking ball 14 is normally secured by a locking sleeve 15 against outward radial displacement, and, for that purpose, the locking sleeve 15 is pressed by a helical spring 16 into a front locking position If the user displaces the locking sleeve 15 backwards by hand against the force of the spring 16, the locking ball 14 is able to yield outwardly in a radial direction. In the state shown in Figure 2, and with the hammer drill bit 9 inserted in the tool holder 10, the locking ball 14 engages in an axial depression, closed at both ends, in the shank of the hammer drill bit 9, and thus secures the hammer drill bit 9 against falling out of the tool holder 10 If the locking sleeve 15 is displaced backwards against the force of the spring 16, the hammer drill bit can be pulled out of the tool holder, since the locking ball 14 is then able to yield outwardly in a radial direction. Such a construction and such a mode of operation are accepted and generally well known for the use of hammer drill bits having a so-called SDS-Plus shank.

In its rear end region, the receiving body 11 of the tool holder 10 has through-bores 19, into which locking members 20 in the form of balls extend. With the tool holder 10 mounted on the spindle 7 of the hammer, these locking member 20 are in interlocking engagement with corresponding depressions on the outer circumference of the spindle 7 Moreover, in the position illustrated, a positioning sleeve 21 prevents outward radial displacement of the locking balls 20, so that the tool holder is coupled, such that it is locked against rotation and is not axially displaceable, to the spindle 7 by means of the locking balls 20.

The positioning sleeve 21 is pressed towards the locking positions shown in the Figures by a helical spring 22, which is supported at its front end against a retaining ring 23 fixed in the receiving body 11 and at its rear end against a shoulder of the positioning sleeve 21. To release the tool holder from the spindle 7, the user displaces the positioning sleeve 21 axially forwards by hand against the force of the spring 22, with the result that a rear portion of the positioning sleeve 21 more deeply recessed radially enters the region of the locking members 20, so that these are able to yield radially outwards, that is, the tool holder 10 can be removed from the spindle 7

As indicated in Figure 1 above the centre line, the front end of a punch 8 movable with a reciprocating motion is located adjacent to the rear end of the inserted hammer drill bit 9. The impacts from a reciprocating percussion member of the pneumatic percussion mechanism act on this punch in the manner customary for such hammers, and the punch transfers the impacts to the drill bit 9. When the inserted hammer drill bit 9 comes free of the workpiece, the punch 8, and hence also the hammer drill bit 9, is displaced forwards as a consequence of the impact action of the percussion member and enters the idling position, indicated in Figure 1 beneath the centre line. This sudden forward movement of the punch 8 is braked at an annular shoulder of the spindle 7 and the resulting jerk is transferred from the spindle 7 to the receiving body 11 of the tool holder 10. Since the positioning sleeve 21 has to be supported at its rear end against the force of the spring 22 on the receiving body 11, this support transfers the shock or impact action from the receiving body 11 to the positioning sleeve 21, which is consequently able to shift forwards against the force of the spring 22 so that the tool holder 10 is released from the spindle 7.

Since releasing the tool holder 10 from the spindle 7 in this manner cannot be counteracted by increasing the stiffness of the spring 22, because the user would then find it difficult to displace the tool holder forwards by hand to release the tool holder 10, between a rear annular shoulder 18 on the receiving body 11 of the tool holder 10 and the rear end of the positioning sleeve 21 there is, as shown, a damping spring 25 in the form of a disc spring, which consists substantially of an annular disc 26 with radial indentations 28 serving for exact adjustment of its spring constant. This damping spring, which in one case had a spring constant of 170 N/mm, is normally in its undeformed state. It absorbs the impacts or blows acting from the receiving body 11 towards the positioning sleeve 21 and undergoes corresponding deformation, with no "hard" transfer of impact to the positioning sleeve 21. The positioning sleeve 21 is therefore not displaced axially forwards by such impacts. On the contrary, the damping spring 25 effects a reliable "disengagement" of the receiving body 11 and positioning sleeve 21.

## Claims

1. A hammer, having
- a hammer housing (2, 3, 4),
- a motor arranged in the hammer housing (2, 3, 4),
- a spindle (7) arranged to be rotatingly driven by the motor,
- a percussion mechanism arranged to be driven by the motor and having a percussion member movable with a reciprocating motion, and
- a tool holder (10) releasably mounted at the front end of the spindle (7), the tool holder having a receiving body (11) for receiving, a hammer drill bit (9) so that it is locked against rotation, and on which blows of the percussion member are to act,
wherein radially displaceable locking members (20) are provided for coupling the spindle (7) and the tool holder (10), which, in the coupled state, are supported against radially outward displacement by a positioning sleeve (21) arranged on the receiving body (11) and positioned in its locking position, and when the positioning sleeve (21) is displaced axially forwards against spring pressure into a release position, the locking members are displaceable radially outwards, so that the tool holder (10) can be removed from the spindle (7),
**characterised in that**
between the receiving body (11) and the positioning sleeve (21) there is arranged a damping spring (25) supporting the positioning sleeve (21) in its locking position.

2. A hammer according to claim 1, wherein the damping spring (25) is in its undeformed state when the positioning sleeve (21) is in its locking position.

3. A hammer according to claim 1 or 2, wherein the damping spring (25) is arranged between an annular shoulder (18) provided at the rear end of the receiving body (21) and the rear end of the positioning sleeve (21).

4. A hammer according to any one of claims 1 to 3, wherein the damping spring (25) is in the form of a disc spring.

## Patentansprüche

1. Hammer mit
- einem Hammergehäuse (2, 3, 4),
- einem im Hammergehäuse (2, 3, 4) angeordneten Motor,
- einer vom Motor drehend antreibbaren Spindel (7),
- einem vom Motor antreibbaren Schlagmechanismus mit einem hin- und herbewegbaren Schlagkörper und
- einer am vorderen Ende der Spindel (7) lösbar gehalterten Werkzeugaufnahme (10) mit einem Aufnahmekörper (11) zur Aufnahme eines Hammerbohrers (9), so daß dieser gegen Drehung verriegelt ist und auf ihn Schläge des Schlagkörpers wirken,
wobei zur Kopplung von Spindel (7) und Werkzeugaufnahme (10) radial verlagerbare Riegelkörper (20) vorgesehen sind, die im gekoppelten Zustand von einer auf dem Aufnahmekörper (11) angeordneten, sich in ihrer Riegelstellung befindenden Positionierhülse (21) gegen radiale Verlagerung nach außen abgestützt sind und die bei gegen Federdruck axial nach vorn in eine Freigabestellung verlagerter Positionierhülse (21) radial nach außen verlagerbar sind, so daß die Werkzeugaufnahme (10) von der. Spindel (7) abgenommen werden kann,
**dadurch gekennzeichnet,**
**daß** zwischen dem Aufnahmekörper (11) und der Positionierhülse (21) eine die Positionierhülse (21) in ihrer Riegelstellung abstützende Dämpfungsfeder (25) angeordnet ist.

2. Hammer nach Anspruch 1, wobei sich die Dämpfungsfeder (25) in der Riegelstellung der Positionierhülse (21) in unverformtem Zustand befindet.

3. Hammer nach Anspruch 1 oder 2, wobei die Dämpfungsfeder (25) zwischen einer am hinteren Ende des Aufnahmekörpers (21) vorgesehenen Ringschulter (18) und dem hinteren Ende der Positionerhülse (21) angeordnet ist.

4. Hammer nach einem der Ansprüche 1 bis 3, wobei die Dämpfungsfeder (25) die Form einer Tellerfeder hat.

## Revendications

1. Marteau, comprenant :
- un carter de marteau (2, 3, 4),
- un moteur disposé dans le carter de marteau (2, 3, 4),
- une broche (7) disposée pour être entraînée en rotation par le moteur,
- un mécanisme à percussion agencé pour être entraîné par le moteur et comportant un organe de percussion mobile avec un mouvement de va-et-vient, et
- un porte-outil (10) monté de manière amovible à l'extrémité avant de la broche (7), le porte-outil comportant un corps récepteur (11) pour recevoir un foret de marteau (9) de façon à ce qu'il soit bloqué contre une rotation, et sur lequel les coups de l'organe de percussion doivent agir,
dans lequel des organes de verrouillage pouvant être déplacés radialement (20) sont prévus pour raccorder la broche (7) et le porte-outil (10), lesquels, à l'état accouplé, sont soutenus contre un déplacement vers l'extérieur radialement par un manchon de positionnement (21) agencé sur le corps récepteur (11) et positionné dans sa position de verrouillage, et lorsque le manchon de positionnement (21) est déplacé axialement vers l'avant à l'encontre d'une pression du ressort jusqu'à une position de libération, les organes de verrouillage peuvent être déplacés radialement vers l'extérieur, de façon à ce que le porte-outil (10) puisse être retiré de la broche (7),
**caractérisé en ce que**,
entre le corps récepteur (11) et le manchon de positionnement (21), il est disposé un ressort amortisseur (25) soutenant le manchon de positionnement (21) dans sa position de verrouillage.

2. Marteau selon la revendication 1, dans lequel le ressort amortisseur (25) est dans son état non déformé lorsque le manchon de positionnement (21) est dans sa position de verrouillage.

3. Marteau selon la revendication 1 ou 2, dans lequel le ressort amortisseur (25) est agencé entre un épaulement annulaire (18) prévu à l'extrémité arrière du corps récepteur (21) et l'extrémité arrière du manchon de positionnement (21).

4. Marteau selon l'une quelconque des revendications 1 à 3, dans lequel le ressort amortisseur (25) est sous forme de rondelle Belleville.
